# EUROPEAN PATENT APPLICATION

(11) **EP 3 010 007 A1**
(43) Date of publication of application: **20.04.2016**
(21) Application number: 15163341.9
(22) Date of filing: 13.04.2015
(51) Int. Cl.: G09F 13/20, G09F 13/22, G09F 3/20, G09F 13/44

(54) **ELECTRONIC INFORMATION LABEL ACCESSORY**

(30) Priority: 14.10.2014 KR 20140138574
(71) Applicant: Samsung Electro-Mechanics Co., Ltd., Gyeonggi-do (KR)
(72) Inventor: Kim, Wan Soo, Gyeonggi-do (KR); Jo, In Ho, Gyeonggi-do (KR); Kim, Yong Joo, Gyeonggi-do (KR)
(74) Representative: Grünecker Patent- und Rechtsanwälte PartG mbB

(57) **Abstract**

Disclosed is an electronic information label (171) that electronically displays information, and more particularly an electronic information label (EIL) accessory that is attached to an electronic information label to promote products separately from the electronic information label. The EIL accessory includes a space for inserting and fixing the electronic label, and may externally emit light for product promotions. The promotion function of the electronic labels may be complemented by providing visual and auditory prompts to attract customers' attention.

## Description

### CROSS-REFERENCE TO RELATED APPLICATION(S)

This application claims priority from Korean Patent Application No. 10-2014-0138574, filed on October 14, 2014, in the Korean Intellectual Property Office, the entire disclosure of which is incorporated herein by reference for all purposes.

### BACKGROUND

### 1. Field

The following description generally relates to techniques for electronic information labels that electronically display information, and more particularly to an electronic information label accessory that is attached to an electronic information label to perform product promotions separately from the electronic information label.

### 2. Description of the Related Art

Paper labels attached to store shelves are inefficient in that the labels are required to be changed every time product information is changed, thereby causing environmental problems.

As a substitute for the paper label, an electronic information label (EIL, hereinafter referred to as electronic labels) that electronically shows product information and changes information to show updated product information is known. The electronic label receives product information from a server through a gateway.

An electronic label may show information on specially promoted products by performing a promotion function, which works to draw customers' attentions to the specially promoted products rather than to other products.

The electronic label may display promotions by blinking at specific areas, such as the electronic paper display (EPD) area, which includes a color sheet laid on top of the EPD, or a bezel area.

However, the electronic label may not perform promotions in an active manner, producing only a limited effect of promotions, and consuming much battery power.

### SUMMARY

Provided is an electronic label accessory that may perform a promotion function in an active manner that surpasses the existing promotion function of electronic labels.

The electronic label accessory may reduce battery consumption caused by the promotion function of electronic labels.

In one general aspect, there is provided an electronic label accessory that includes: a space into which an electronic label is inserted and fixed; and a light emitter that emits light for promotions.

The light emitter may be one or more light emitting diodes (LEDs) installed on an outer surface of the electronic label accessory to emit light for promotions.

The electronic label accessory may include a fluorescent lamp configured to be installed in the electronic label accessory to emit light for promotions.

The electronic label accessory may include a raised rim configured to be formed at a portion that contacts an electronic label so that the electronic label may be detachable.

The electronic label accessory may include a front portion configured to transmit light and to be formed at a portion that contacts a display of the electronic label that is engaged inside the electronic label accessory.

The electronic label accessory may include a rear portion configured to be formed at a portion that contacts the rear surface of the electronic label that is engaged inside the electronic label accessory.

The electronic label accessory may include a speaker configured to externally output audio sources for promotions.

### BRIEF DESCRIPTION OF THE DRAWINGS

FIG. 1 is a schematic diagram of an entire electronic label system according to an exemplary embodiment.
FIG. 2 is a block diagram illustrating an electronic label accessory according to an exemplary embodiment.
FIG. 3 is a diagram illustrating an external view of an electronic label accessory according to an exemplary embodiment.
FIG. 4 is a diagram illustrating an external view of an electronic label accessory according to another exemplary embodiment.
FIG. 5 is diagram illustrating a perspective view taken from the lateral side of the electronic label accessory in FIG. 4.
FIG. 6 is a diagram illustrating an external view of an electronic label accessory according to another exemplary embodiment.
FIG. 7 is a diagram illustrating an external view of an electronic label accessory according to still another exemplary embodiment.
FIG. 8 is a diagram illustrating an external view of an electronic label accessory according to yet another exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

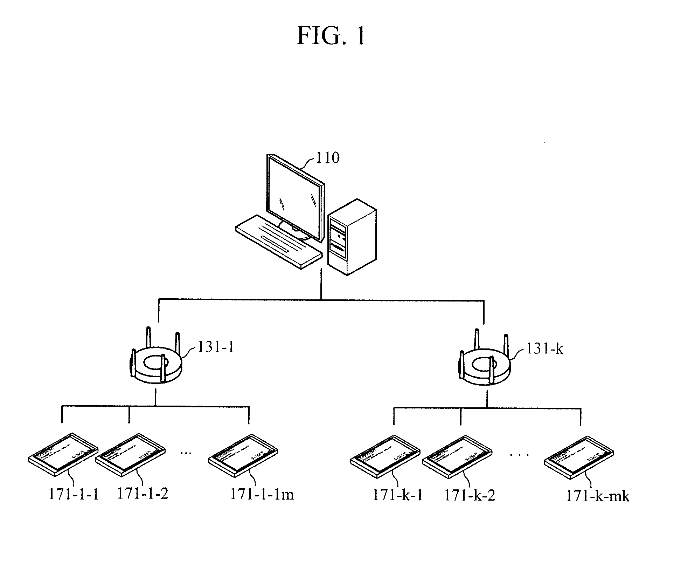

FIG. 1 is a schematic diagram of an entire electronic label system according to an exemplary embodiment. As illustrated in FIG. 1, a label management server 110 communicates with a plurality of electronic labels 171-1-1, 171-1-2, ..., and 171-1-1m via a gateway 130. In the exemplary embodiment, the label management server 110 and the gateway 130 are connected through a wired network, and the gateway 130 and the electronic labels 171-1-1, 171-1-2, ..., and 171-1-1m belonging to a group associated with the gateway 130 communicate with each other according to protocols defined on a PHY/MAC layer in accordance with near field wireless communication, for example, IEEE 802.15.4 standards.

Electronic labels are divided into a plurality of groups and product information is updated for each group. The electronic labels 171-1-1, 171-1-2, ..., and 171-1-1m managed through the same gateway 130 may form a group. In order to reduce power consumption of electronic labels that are battery-powered, the electronic labels are maintained in a sleep mode except for a wake-up period, which is required for information updates. Electronic paper displays (EPDs) are used so that the electronic labels may display information even without power supply. Also, though the electronic labels may have a promotion function, the function is used sparingly so as to reduce battery consumption.

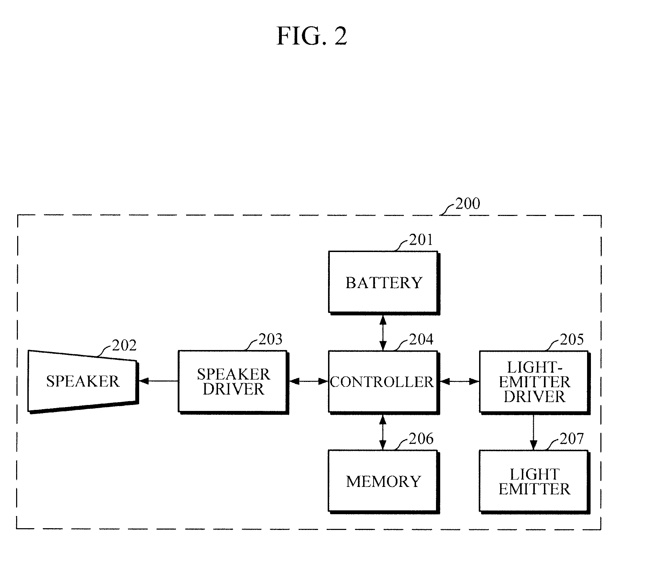

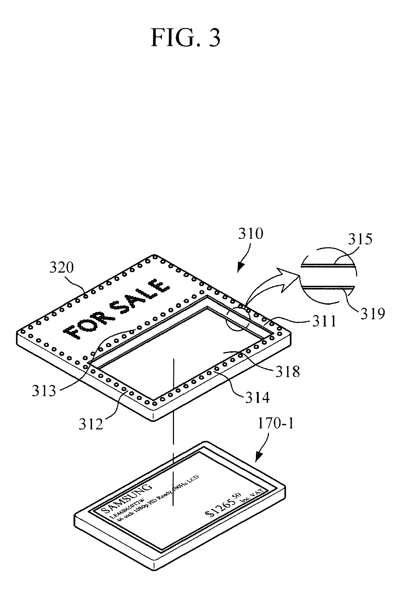

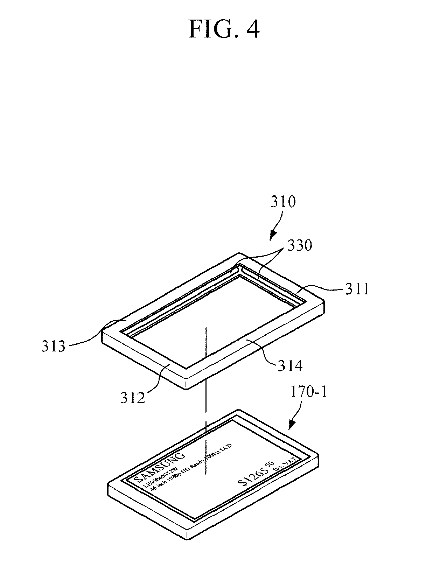

FIG. 2 is a block diagram illustrating an electronic label accessory according to an exemplary embodiment. FIG. 3 is a diagram illustrating an external view of an electronic label accessory according to an exemplary embodiment. FIG. 4 is a diagram illustrating an external view of an electronic label accessory according to another exemplary embodiment. The electronic label accessory 200 includes a body 310, a light emitter 207, a light-emitter driver 205, and a controller 204. The body 310 includes a hollow engaging portion into which an electronic label is inserted in such a manner that the body encases the outer circumference of the electronic label. The body 310 engages the electronic label by encasing the outer edges of the electronic label. As illustrated in FIGS. 3 and 4, the electronic label may be inserted from the rear surface of the body 310. The electronic label may be engaged with the body 310 in such a manner that the electronic label is wedged into place due to the elastic quality of the body 310 through an inserting hole 318 from the rear surface of the body 310. In another exemplary embodiment, the electronic label may be inserted from the front surface of the body 310 that is open. The body 310 may be made of, for example, a gel-type material or a leather-type material, synthetic leather, a synthetic resin, and the like. The body 310 may be made in various shapes, including a retractable type, a diary type, a drawer type, and the like.

In the case where the electronic label has at least one operation button, the body 310 may include at least one button coupling portion that is provided at a position corresponding to the position of the operation button. The button coupling portion of the body 310 is thicker than an average thickness of the body 310 and protrudes to be outwardly distinguished. The same can be said when the electronic label is engaged with the electronic label accessory 200, in that, even then, the operation button may be outwardly distinguished. By pressing on the surface of the button coupling portion using a finger and the like, a user may easily input operation commands.

The engaging portion may include a first raised rim 315 and a second raised rim 319. The first raised rim 315 is formed on the inner surface along the edges of the inserting hole 318 to grip the front edges of the electronic label, and the second raised rim 319 is formed on the inner surface of the inserting hole to grip the rear edges of the electronic label. As illustrated in FIG. 3, the first raised rim 315 and the second raised rim 319 run continuously along the edges of inner walls 311, 312, 313, and 314 of the body 310. However, the raised rims are not limited thereto, and the first raised rim 315 and the second raised rim 319 may run along only at least two of the four inner walls 311, 312, 313, and 314 in either a continuous or a non-continuous manner. The thickness of the first raised rim 315 and the second raised rim 319 depends on that of the electronic label that is to be inserted, whereby the first raised rim 315 and the second raised rim 319 are formed to run along the edges of the inner walls of the body in a manner which allows for an electronic label nestle therebetween.

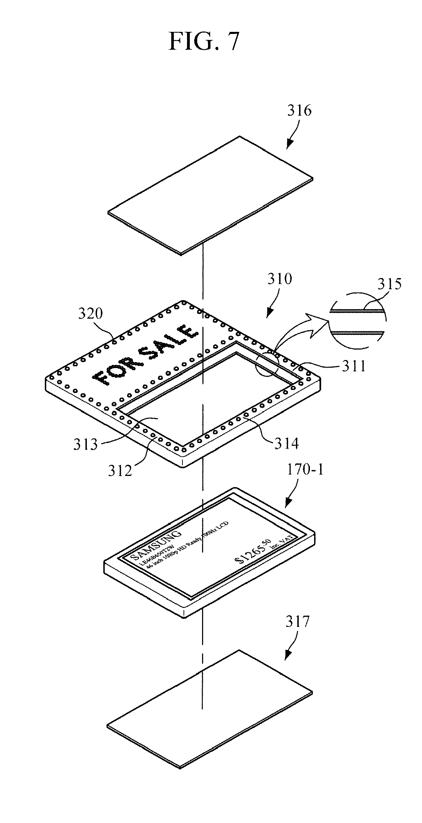

FIG. 7 is a diagram illustrating an external view of an electronic label accessory according to still another exemplary embodiment. In the exemplary embodiment, the body 310 includes a front portion 316. The front portion 316 is placed in the inserting hole 318 to cover the front surface of the electronic label inserted into the engaging portion, and has light transmission properties. As illustrated in FIG. 7, where once an electronic label has been engaged with the body 310, the front portion 316 may be inserted from the front surface of the inserting hole 318. The front portion 316 is a surface that contacts and covers a display of the electronic label. The front portion 316 has a portion, for example a see-through window, which is light-transmittable, that allows users to see information displayed on the electronic label. In the exemplary embodiment, the see-through window is made of plastic that is transparent and scratch-resistant. In another exemplary embodiment, the front portion 316 may be an opening without the see-through window. In yet another exemplary embodiment, the see-through window may be coated with a colored film to indicate various promotions desired by a seller. The front portion 316 may be wedged into place due to the elastic quality of the body 310 such that there is no need for any supplementary materials to fix the front portion into place, thereby simplifying the structure and production.

In the exemplary embodiment, the body 310 may include a rear portion 317. The rear portion 317 is placed in the inserting hole to cover the back of the electronic label inserted into the engaging portion. As illustrated in FIG. 7, once the electronic label has been engaged with the body 310, the rear portion 317 is inserted from the back of the inserting hole 318. The back of the electronic label may have an uneven surface due to a heat release outlet or a speaker 202 provided thereon, and so the rear portion 317 may have a groove that lines up with the uneven portion. The rear portion 317 may be wedged into place due to the elastic quality of the body 310 such that there is no need for any supplementary materials to fix the rear portion into place, thereby simplifying the structure and production. The front portion 316 and the rear portion 317 are engaged with the body 310 to cover the entire surface of the electronic label and to protect the electronic label from an external shock.

In the exemplary embodiment, a light emitter is provided on the body 310 to visually output a promotion display pattern. The light emitter may emit light of a specific wavelength by exciting energy generated by electromagnetic waves, heat, and friction. The promotion display pattern may attract customers' attention as the light emitter blinks at regular intervals. In another exemplary embodiment, the light emitter may blink at irregular intervals. Power required to operate the light emitter may be supplied from a power source that is not included in the electronic label accessory 200. The power source may be a small battery that is replaceable or a battery that is recharged by an external power source through wired or wireless connection.

In the exemplary embodiment, a light-emitter driver 205 drives the light emitter. The light-emitter driver 205 interfaces with a controller to drive the light emitter. The light-emitter driver 205 drives the light emitter according to a control signal so that the light emitter may display promotions. For example, according to a digital control signal of the controller, the light-emitter driver may generate an analog voltage that turns on or off a light emitting diode (LED) lamp or a fluorescent lamp.

The controller interfaces with the light-emitter driver 205 to generate a signal so that the light emitter may emit light. The controller operates as a main controller that controls the whole operation of the electronic label accessory 200. The controller may process production data generated by an external device, for example, a computer. The production data may be data of a computer file that has been set to oscillate, convert, and switch a pulse.

The electronic label accessory 200 may be an interface that receives production data from an external device, interfaces which could be a Universal Serial Bus (USB) port, General Purpose Input/Output (GPIO), or Universal Asynchronous Receiver Transmitter (UART). The external device may be, for example, a computer. In another example, the external device may be an electronic label. In the exemplary embodiment, the electronic label accessory 200 may store production data provided from an external device, and may include a memory 206 to read and process the stored data if necessary. The memory 206 may be a flash memory 206 to minimize the size of a control circuit.

The light emitter may include at least one LED 320. As illustrated in FIG. 3, a plurality of the LEDs 320 may be arranged around the body 310 and the inserting hole 318. The LEDs 320 are formed in a row along the edge of the body 310. A promotion phrase "FOR SALE" is displayed in the center of the upper surface of the body 310 but is not limited thereto, and a plurality of LEDs 320 may be used to display various phrases and various shapes such as stars or flowers. In the case where promotions are displayed in various colors, such as red, green, blue, or white, the LEDs 320 that emit a specific color or the multi-color LEDs 320 may be used. The controller may generate and output a digital pattern control signal that outputs patterns of various colors according to elapsed time or depending on pattern positions of the electronic label accessory. According to the digital pattern control signal, the light-emitter driver 205 may supply power to at least one LED 320, and the light emitter, for example, the LED 320, may be turned on or off according to the supply of driving power so that promotion information may be displayed.

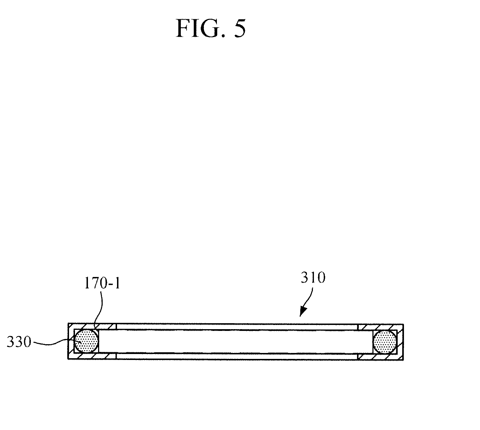

FIG. 5 is diagram illustrating a perspective view taken from the lateral side of the electronic label accessory in FIG. 4. In the exemplary embodiment, the light emitter may include at least one fluorescent lamp 330. As illustrated in FIG. 5, the fluorescent lamp 330 is embedded on the inner surface of the inserting hole 318. Light radiating from the fluorescent lamp reaches the surface of the body 310. The body 310 may be made of light transmittable material, such as poly methyl methacrylate (PMMA) or polystyrene resin, into which light diffusion material may be mixed to diffuse light. In the exemplary embodiment, the light emitter includes a reflector which allows for light radiating from the fluorescent lamp to be reflected in a specific direction.

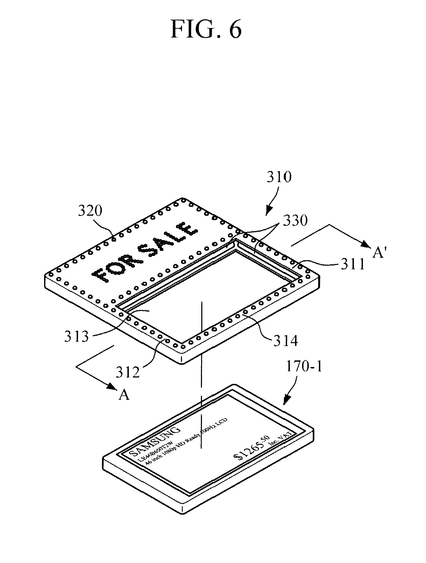

FIG. 6 is a diagram illustrating an external view of an electronic label accessory according to another exemplary embodiment. In the exemplary embodiment, the light emitter includes both at least one LED 320 and at least one fluorescent lamp 330. The controller may output a control signal to simultaneously or selectively operate the LED 320 and the fluorescent lamp 330, and production data input from an external device may be generated appropriately for promotions to enable various promotions.

In the exemplary embodiment, the electronic label accessory 200 may include a speaker 202. The speaker 202 is provided in the body 310 to externally output audio signals. The electronic label accessory 200 may include an audio player and an amplifier. The audio player plays sound data, and the amplifier amplifies played audio data. The speaker 202 positioned on an external surface of the body 310 may output the amplified audio data.

A speaker driver 203 drives the speaker 202. The speaker driver 203 interfaces with the controller to drive the speaker 202 according to control signals of the controller. According to the control signal of the controller, the speaker controller may control the speaker 202 to produce sounds for a promotion. For example, the speaker driver 203 may be a sound playback module that stores a plurality of sound sources and plays selected sound sources according to a control signal of the controller. In another example, the speaker driver 203 may be a circuit that includes a digital to analog (D/A) converter and an analog device to convert, to an analog signal, a pulse train of audio frequency signals output from the controller, and to amplify and modulate the analog signal. In this case, the speaker 202 may play a simple beep sound or siren. In the exemplary embodiment, the controller interfaces with the speaker controller to generate a driving signal to output sound sources from the speaker 202. The controller may operate as a main controller to control the electronic label accessory 200.

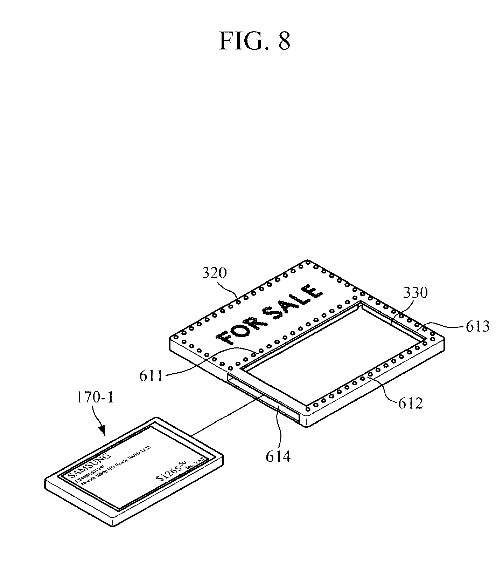

FIG. 8 is a diagram illustrating an external view of an electronic label accessory according to yet another exemplary embodiment. As illustrated in FIG. 8, an inlet 614 is formed on one surface of the body 310 of the electronic label accessory 200, and an electronic label is inserted into the inlet 614 and is engaged with the body 310. A see-through window may be provided at a front portion of the body 310 that contacts a display of the engaged electronic label so that the display of the electronic label may be exposed. A rear portion 317 that contacts the rear surface of the engaged electronic label may face the rear surface of the electronic label so that the electronic label may be protected from an external forces. The front portion and the rear portion are joined together by side surfaces 611, 612, 613, and 614 to be integrally formed. The inlet 614 is formed on one of the side surfaces so that an electronic label may be inserted through the inlet 614. The electronic label accessory 200 may include at least one of either the light emitter or the speaker 202, and descriptions of the light emitter and the speaker 202 are given above.

In the electronic label accessory, a promotion function of the electronic labels may be complemented by providing visual and auditory prompts to attract customers' attention.

Further, by mounting the accessory for specially promoted products onto an electronic label, promotions may be performed by the electronic labels with reduced battery consumption.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An electronic label accessory, comprising:
a body configured to comprise a hollow engaging portion into which an electronic label is inserted in such a manner that the body encases an outer circumference of the electronic label;
a light emitter configured to be provided on the body to visually output a promotion display pattern;
a light-emitter driver configured to drive the light emitter; and
a controller configured to interface with the light-emitter driver to control the light-emitter to emit light.

2. The electronic label accessory of claim 1, wherein the light emitter comprises one or more light emitting diodes (LEDs).

3. The electronic label accessory of claim 2, wherein the LEDs are arranged around edges of the body and an inserting hole.

4. The electronic label accessory of claim 1, wherein:
the light emitter comprises at least one fluorescent lamp; and
the body receives light radiating from the fluorescent lamp and transmits the received light.

5. The electronic label accessory of claim 4, wherein the fluorescent lamp is embedded along an inner surface of the inserting hole.

6. The electronic label accessory of claim 1, wherein the engaging portion comprises:
a first raised rim configured to be formed along an inner surface of the inserting hole to grip the front edges of the electronic label; and
a second raised rim configured to be formed along the inner surface of the inserting hole to grip the rear edges of the electronic label.

7. The electronic label accessory of claim 1, further comprising a front portion configured to be mounted in the inserting hole to cover a front surface of the electronic label inserted into the engaging portion and configured to have light transmission properties.

8. The electronic label accessory of claim 1, further comprising a rear portion configured to be mounted in the inserting hole to cover a rear surface of the electronic label inserted into the engaging portion.

9. The electronic label accessory of claim 1, further comprising:
a speaker configured to be provided in the body to externally output audio signals; and
a speaker driver configured to drive the speaker,
wherein the controller interfaces with the speaker driver to control the speaker to output audio sources.
